# EUROPEAN PATENT APPLICATION

(11) **EP 4 841 533 A1**
(43) Date of publication of application: **18.11.2026**
(21) Application number: 26174968.3
(22) Date of filing: 28.04.2026
(51) Int. Cl.: G06Q 10/04, G06Q 50/26

(54) **DATA GENERATING METHOD AND DATA GENERATING PROGRAM**

(30) Priority: 15.05.2025 JP 2025081972
(71) Applicant: FUJITSU LIMITED, Kawasaki-shi, Kanagawa 211-8588 (JP)
(72) Inventor: YOSHIDA, Yuki, Kawasaki-shi, Kanagawa, 211-8588 (JP); YAMADA, Hiroaki, Kawasaki-shi, Kanagawa, 211-8588 (JP); SUMIDA, Masahiko, Kawasaki-shi, Kanagawa, 211-8588 (JP)
(74) Representative: Hoffmann Eitle

(57) **Abstract**

A data generating method executed by a computer, includes: obtaining mesh statistical population data indicating population statistics according to time points on a mesh-by-mesh basis; obtaining human flow sample data including movement trajectories of users according to the time points; calculating for each of the users and based on the human flow sample data, which mesh of multiple meshes the user belongs to for each time period of multiple time periods; creating a user list indicating for each of the meshes, users belonging thereto for each time period; setting, in advance, a time constraint condition fixing for all the time points, an expansion coefficient for each of the users; calculating under the time constraint condition, the expansion coefficient for each of the users, based on a comparison of the user list and the mesh statistical population data; and replicating the movement trajectories of the human flow sample data for each user using the expansion coefficient for the user.

## Description

### FIELD

The embodiments discussed herein are related to a data generating method and data generating program.

### BACKGROUND

Human flow data processing technologies include expanding small sample human flow data to an actual population scale. There are also human flow simulation technologies that digitally replicate real-world human behavior with high accuracy and enable advanced verification of the effectiveness and impact of policies. In recent years, obtaining human flow data (human movement trajectories) that reveal the movement of people at a detailed level, such as which roads people traveled, has made it possible to perform more realistic human flow simulations.

The following prior arts related to expanding human flow data have been disclosed. For example, there is a technology that obtains the number of terminals located within an area at a set time and the address and location survey results of all targets in a specified area, identifies the terminals present at each location, determines the target location area, and calculates an expansion coefficient based on the number of terminals and the address and location survey results. There is also a technology that uses demographic information, time-based life information concerning the lives and activities of individuals, and area location information for each section of a specified area to estimate the distribution of people in an enclosed area set by a user based on the relationship between the life information and the specified location area (for example, refer to JP 2023-148828 A and JP 2025-22718 A).

An expansion technique that uses mesh statistical population is a technology that expands the number of people in a building (for example, refer to Daiki Kawamori, et al, "Estimating the Number of People Staying in a Building by Integrating Mesh Statistical Population and Individual Movement Trajectory Data," Japan Database Society DEIM Forum, 2022 D24-2). This technique calculates an expansion coefficient that makes an aggregated result of the number of people staying there equal the statistical population of the mobile space from GPS trajectory data (equivalent to human flow data), and expands the people in the building according to the expansion coefficient to determine the total number of people, on a building-by-building basis, which is finer than a mesh.

### SUMMARY

It is an object in one aspect of the embodiments to at least solve the above problems in the conventional technologies.

According to an aspect of an embodiment, a data generating method for expanding human flow data and executed by a computer, includes: obtaining mesh statistical population data indicating population statistics according to time points on a mesh-by-mesh basis; obtaining human flow sample data including a plurality of movement trajectories of a plurality of users according to the time points; calculating for each of the plurality of users and based on the human flow sample data, which mesh of a plurality of meshes the each of the plurality of users belongs to for each time period of a plurality of time periods; creating a user list indicating for each of the plurality of meshes, users of the plurality of users belonging thereto for each time period; setting, in advance, a time constraint condition fixing for all the time points, an expansion coefficient for each of the plurality of users; calculating under the time constraint condition, the expansion coefficient for each of the plurality of users, based on a comparison of the user list and the mesh statistical population data; and replicating the plurality of movement trajectories of the human flow sample data for each of the plurality of users using the expansion coefficient for the each of the plurality of users.

### BRIEF DESCRIPTION OF DRAWINGS

Fig. 1 is a functional diagram of a first example according to an embodiment.
Fig. 2A is a diagram depicting an example of data used in a data process in a background art.
Fig. 2B is a diagram depicting an example of data used in the data process in the background art.
Fig. 2C is a diagram depicting an example of data used in the data process in the background art.
Fig. 2D is a diagram depicting an example of data used in the data process in the background art.
Fig. 3 is an explanatory diagram of a problem arising in the background art.
Fig. 4 is a diagram depicting an example of mesh statistical population data used in the embodiment.
Fig. 5A is a diagram depicting an example of data used in data processing of human flow sample data according to an embodiment.
Fig. 5B is a diagram depicting an example of data used in the data processing of human flow sample data according to an embodiment.
Fig. 6 is a diagram depicting an example of data used in the data processing of human flow sample data according to an embodiment.
Fig. 7 is a diagram depicting an example of a process of calculating an expansion coefficient according to the embodiment.
Fig. 8 is a diagram depicting an example of a data replication process based on the expansion coefficient according to an embodiment.
Fig. 9A is a chart for explaining deviation from a population parameter when human flow is expanded in the background art.
Fig. 9B is a diagram depicting human flow expansion according to the embodiment.
Fig. 10 is a block diagram of an example of a hardware configuration of a data generating device.
Fig. 11 is a flowchart depicting an example of a data process by the data generating device according to the embodiment.
Fig. 12 is a functional diagram of a second example.
Fig. 13 is an explanatory diagram of synthesis of multiple human flow samples that match a date specification.
Fig. 14 is a functional diagram of a third example.
Fig. 15 is an explanatory diagram of an example of updating distribution of probabilistic expansion coefficients.

### DESCRIPTION OF EMBODIMENTS

First, problems associated with the conventional techniques are discussed. The number of human flow data samples used in conventional technologies is small, on the order of a few percent of the total population, and analysis and digital rehearsals using a small number of samples may significantly deviate from reality. For example, when expanding human flow data using conventional technologies, a uniform magnification factor for expansion is applied to people (users) in the same area. However, in reality, even for users in the same area, movement patterns differ according to person and time, and proportions thereof moving to certain areas differ (magnitude of travel demand). For example, conventional technologies classify people based on the starting point of their movement trajectory. However, since the travel route of each user varies, uniform classification of users based only on a starting point thereof makes it impossible to capture differences in the travel patterns of each user according to time, or characteristics of travel patterns thereof, such as the proportions of destinations and therefore, it impossible to improve the accuracy of expanding human flow data. As a result, conventional technologies are unable to accurately estimate human flow on an actual population scale using human flow data with a small number of samples.

Embodiments of a data generating method and a data generating program according to the present disclosure will now be described in detail with reference to the drawings. The present disclosure performs a data generating process for human flow data expansion, which expands human flow data with a small number of samples to a population scale of an area of interest. In an embodiment, data is generated (replicated) taking into account the characteristics of the movement trajectories (temporal changes in location) of sampled people (referred to as users) and different movement routes for each user, thereby obtaining expanded human flow data. This improves the accuracy of the expanded human flow data by using a fine expansion rate that corresponds to the different movement trajectories for each user.

In an embodiment, for example, to expand the human flow data, mesh statistical population data indicating population statistics according to time is obtained for each mesh. Also, human flow sample data with a small number of samples and containing user movement trajectories according to time is obtained. Then, based on the human flow sample data, meshes to which users belong are calculated for each time period. Next, a user list of users belonging to each mesh for each time period is created. Here, a time constraint is set in advance, which fixes the expansion coefficient for each user at all time points. Next, under the time constraint, an expansion coefficient for each user is calculated based on a comparison between the user list and the mesh statistical population data. Then, the user movement trajectories of the human flow sample data are replicated using the expansion coefficient for each user. In the present disclosure, a data generating device, such as a general-purpose PC or server, executes a data generating process for expanding human flow data.

In the present embodiment, an example is described in which human flow sample data (equivalent to human flow data) and mesh statistical population data are obtained, and a data process is performed to expand human flow (scale up the human flow sample data). Examples of human flow sample data include trajectory data and an origin-destination (OD) data.

Human flow sample data (trajectory data, OD data) has a small sample count and low reproducibility of the population parameter. Trajectory data is data that indicates the movement trajectory of a user in units of time points and roads. It may be obtained by purchase, but only data for the purchased period is available. OD data is data that indicates the amount and direction of movement of a user between specified areas. It may be obtained by purchase, but only data for the purchased period is available. Furthermore, OD data does not indicate which roads a user has traveled.

Mesh statistical population data is population data by mesh region (area) that changes over time. This mesh statistical population data may be obtained in quasi-real time, for example, in units of the past hour. However, because it is statistical data, its resolution is coarse and it is not possible to determine which roads individual users traveled and how the users did so.

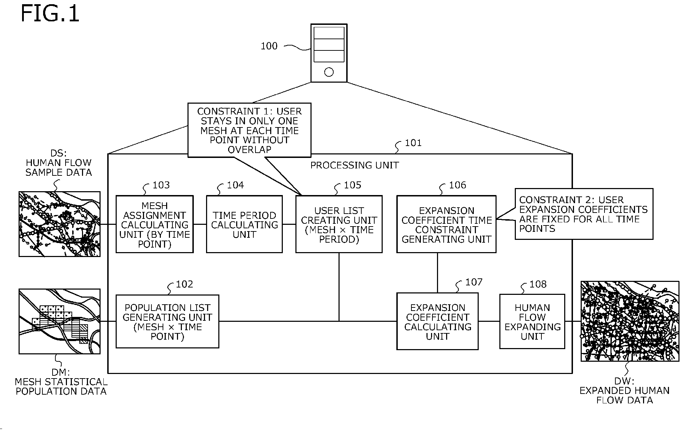

Fig. 1 is a functional diagram of a first example according to the embodiment. A processing unit 101 of a data generating device 100 includes functional units, namely, a population list generating unit 102, a mesh assignment calculating unit 103, a time period calculating unit 104, a user list creating unit 105, an expansion coefficient time constraint generating unit 106, an expansion coefficient calculating unit 107, and a human flow expanding unit 108. The processing unit 101 obtains human flow sample data DS and mesh statistical population data DM as input data.

An overview of data generation according to the embodiment will be described using Fig. 1. Details of the processes of each functional unit of the processing unit 101 will be described later. The population list generating unit 102 generates a population list of all combinations (mesh×time) for each area (mesh) by time from the obtained mesh statistical population data DM.

The mesh assignment calculating unit 103 calculates the mesh to which a user belongs based on the latitude and longitude of the trajectory of the user from the human flow sample data DS, and assigns this to the trajectory data. The mesh assignment calculating unit 103 calculates trajectory data indicating which mesh each user is in at each time. The time period calculating unit 104 rounds the time of the trajectory data calculated by the mesh assignment calculating unit 103 to a predetermined time range (time period) and assigns this value to the trajectory data. This makes it possible to tally up the mesh to which the user belongs according to time period.

The user list creating unit 105 creates, for each mesh, a user list according to time period (mesh×time period) based on the output of the population list generating unit 102 and the output of the time period calculating unit 104.

The user list creating unit 105 calculates the mesh to which each user belongs for each time period under a spatial constraint (constraint 1) that a user stays in only one mesh at each time point without overlap. The user list creating unit 105 then creates a user list that compiles users corresponding to each combination of mesh and time period.

The expansion coefficient time constraint generating unit 106 sets a time constraint condition (constraint 2) that each user expansion coefficient is fixed at all time points. Constraint 2 prevents inconsistencies such as users arbitrarily increasing or decreasing over time and ensures temporal continuity.

The expansion coefficient calculating unit 107 calculates an expansion coefficient for each user of a trajectory that reduces the overall error from population parameter of the mesh population for each time period and each mesh, based on constraint 2 generated by the expansion coefficient time constraint generating unit 106.

The human flow expanding unit 108 replicates the movement trajectories of each user in the obtained human flow sample data DS by the expansion coefficient calculated by the expansion coefficient calculating unit 107. Based on this replication, the processing unit 101 (human flow expanding unit 108) outputs expanded human flow data DW.

In the present embodiment, a human flow data expanding process is performed, capturing the characteristics of temporal positional changes in the movement trajectories of users. This allows for accurate replication by taking into account the movement trajectories, which differ according to user. The replication, which allows for the derivation of a fine-tuned expansion rate for each user, improves the accuracy of the expanded human flow data. In the present embodiment, an expansion rate is determined for each user movement pattern during replication, enabling more realistic replication (scale expansion of human flow samples) that takes into account the demand and likelihood of movement.

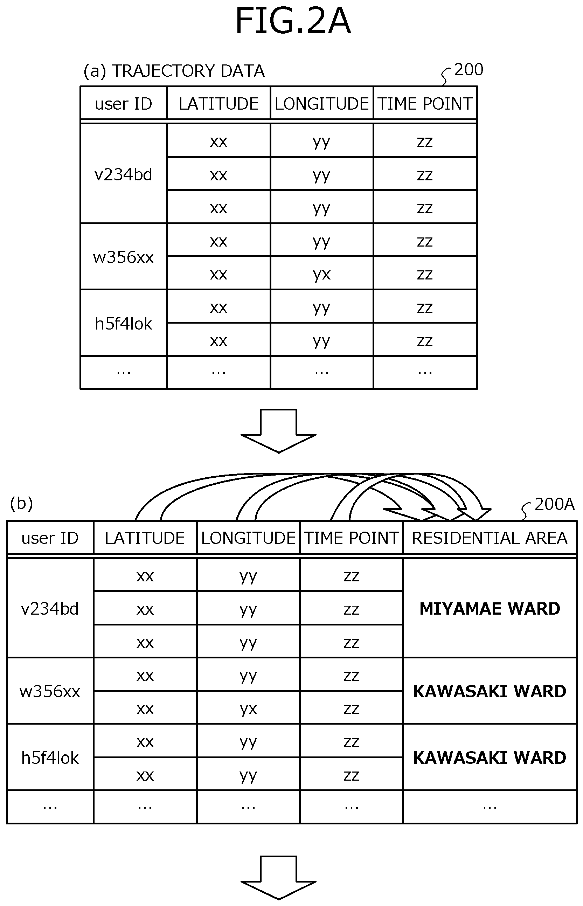

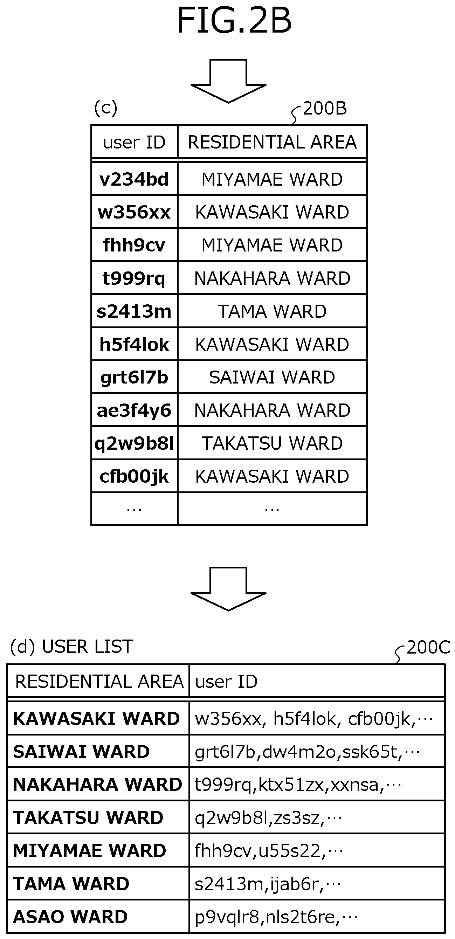

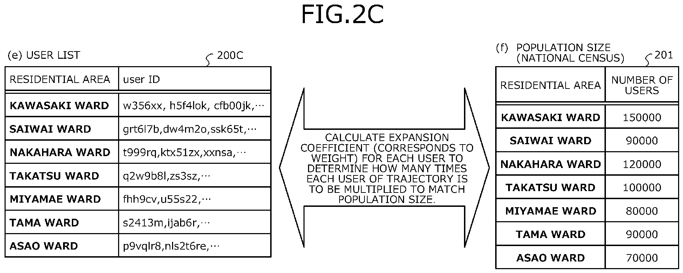

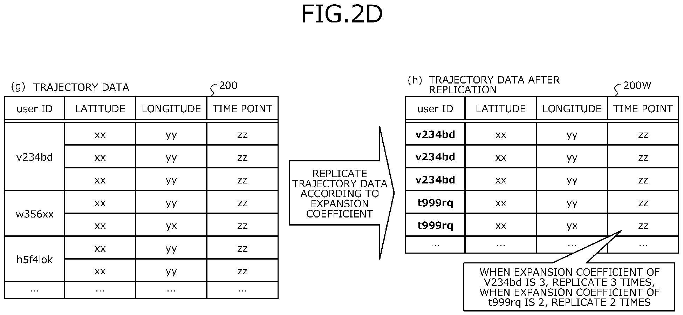

Figs. 2A, 2B, 2C, and 2D are diagrams depicting an example of data used in a data process in the background art. Here, an example of a human flow expanding process in the background art, which is a premise of the present embodiment, is described. Diagrams will be used to explain a sequence of the data process performed by a processing unit (not depicted).

In Fig. 2A, (a) depicts input trajectory data 200. The trajectory data 200 includes information such as a user ID for each user and the location of each user at each time point (latitude, longitude, and time point).

Next, based on the latitude, longitude, and time points of each user in the trajectory data 200 depicted in (a) of Fig. 2A, the processing unit estimates, for each user, a residential area where the user resides. Then, the processing unit generates trajectory data 200A, which includes information concerning the residential area of each user, as depicted in (b) of Fig. 2A. The residential area may be pre-assigned to the trajectory data 200.

Next, the processing unit generates data 200B, as depicted in (c) of Fig. 2B, by extracting unique user IDs and residential areas from the trajectory data 200A. Next, the processing unit generates data 200C, as depicted in (d) of Fig. 2B, by compiling users (user IDs) belonging to each residential area from the data 200B. The data 200C corresponds to the user list in the embodiment and each unique user in each residential area in the trajectory data 200 is counted as one person.

Next, the processing unit obtains population parameter data 201 contained in census data as depicted in (f) of Fig. 2C. Census data is updated every five years. The processing unit compares the data (user list) 200C depicted in (e) of Fig. 2C (the same data as (d) of Fig. 2B) with the population parameter data 201 in (f) of Fig. 2C. The processing unit then calculates an expansion coefficient (equivalent to a weight) for each user, determining how many times each user in the user list 200C must be multiplied to match the population of the population parameter.

Next, when calculating the expansion coefficient, for example, if the user list 200C in (e) of Fig. 2C contains 1,000 users from Kawasaki Ward, the processing unit calculates one unique user ID for 150 users (multiplying all users by 150), which matches the population parameter of 150,000 in (f) of Fig. 2C. In this case, the processing unit calculates 150 as the expansion coefficient.

Next, the processing unit replicates the trajectory data 200 depicted in (g) of Fig. 2D (the same data as (a) of Fig. 2A) by the calculated expansion coefficient (magnification factor), thereby generating the replicated trajectory data 200W depicted in (h) of Fig. 2D. For example, when the expansion coefficient for user ID "v234bd" is 3, the replicated trajectory data 200W will be replicated for three people (three times larger), and when the expansion coefficient for user ID "t999rq" is 2, the replicated trajectory data will be replicated for two people (two times larger).

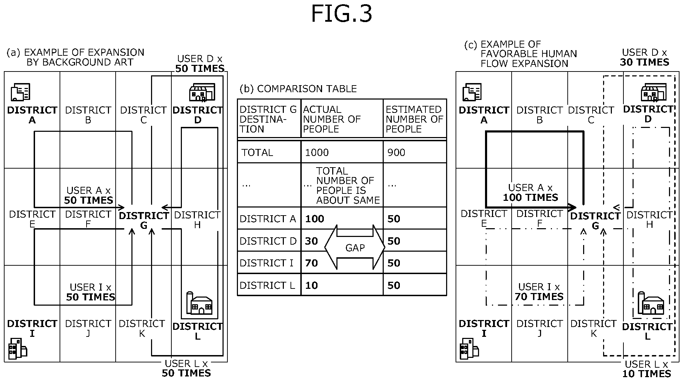

Fig. 3 is an explanatory diagram of a problem arising in the background art. When expanding human flow sample data (trajectory data, OD data), a uniform magnification factor for expansion is applied to users in a certain area. However, even when users actually belong to the same area, the travel patterns thereof and the proportion of users traveling to certain areas (the magnitude of travel demand) vary from user to user.

In Fig. 3, (a) depicts daily travel patterns of each user as an example of expansion using the background art. For example, the travel pattern of user A in district G is district C → district B → district A → district E → district F, then back to district G. User the travel pattern of user I is district F → district E → district I → district J → district K, then back to district G. In the background art, when the expansion coefficient (magnification factor) for district G is 50, all users A, D, I, and L are multiplied by 50 (50 people), irrespective of the respective travel patterns of the users.

In Fig. 3, (b) is a comparison table indicating the actual number of users in district G who have moved (traveled) to other districts and an estimation of the number estimated by the background art. The actual number of users in district G is "1,000," while the estimated number is "900," which is almost the same. However, the actual number of users who moved from district G to district A is "100," while the estimated number is "50," resulting in a gap in the number of people. Similarly, the actual number of users who moved from district G to district D is "30," while the estimated number is "50," resulting in a gap in the number of people. Here, the estimated number of people who moved from District G to each other district is a uniform "50." The proportion of destinations varies depending on demand and may even vary from day to day.

In the background art, users are classified based on the starting point of the travel patterns thereof. However, travel routes vary widely, and uniform classification based only on the starting point fails to take into account that travel routes differ from user to user and thus, accurate replication is impossible. As such, the background art does not take into account differences in travel patterns between users or the characteristics of travel patterns, such as the proportion of destinations.

In Fig. 3, (c) depicts an example of preferable human flow expansion. The expansion rates corresponding to the actual number of people who moved from District G to each district in (b) of Fig. 3 are depicted. For example, a desirable expansion coefficient for user A is "100" according to the actual number of people who moved from District G to District A, "100." Furthermore, a desirable expansion coefficient for user I is "70" according to the actual number of people who moved from District G to District I, "70." As described, by performing expansion using different expansion coefficients according to the movement pattern of each user, it is possible to expand human flows that are closer to the actual movement patterns of users.

In the present embodiment, with consideration of the problem depicted in Fig. 3, when human flow sample data is expanded, expansion (data replication) is performed taking into account the characteristics user movement patterns, which differ according to user.

In the present embodiment, the expansion rate for each hour corresponding to each user is adjusted to the population for each hour so that the expansion rate is unique. In addition, when aggregating the meshes to which users belong for each time point before expansion, a spatial constraint that each user is to be located in only one mesh for a single time period is imposed.

Thus, in the present embodiment, an expansion coefficient is set for each movement route. As a result, accurate replication becomes possible. To achieve this, in the present embodiment, the following constraints 1 and 2 are set.

Constraint 1: For each user in the human flow sample data, a constraint that the user is to be located in only one area during a single time period is set. Under constraint 1, the mesh to which the user belongs at each time point is calculated, and a corresponding user list is created for each combination of area and time period.

Constraint 2: A time constraint is set such that each user expansion coefficient (expansion rate for each time corresponding to each user) is fixed at all time points. Under constraint 2, an expansion coefficient for each user is calculated so that the error with respect to the population parameter of the mesh population is reduced overall for each time period and each area (mesh).

An example of a human flow expanding process of the embodiment will be described with reference to the drawings according to the sequence of data processes performed by functional units of the processing unit 101 depicted in Fig. 1. In the embodiment, as depicted in Fig. 1, human flow sample data DS and mesh statistical population data DM are obtained, and the human flow expanding process is performed on the basis of the obtained data.

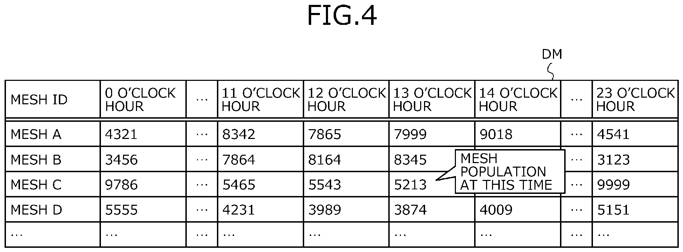

Fig. 4 is a diagram depicting an example of mesh statistical population data used in the embodiment. The mesh statistical population data DM obtained by the processing unit 101 is data that includes the population of meshes during each time period according to mesh ID, for each specified area on a map. For example, in mesh A, the population during "0 o'clock hour" is "4,321," the population during "11 o'clock hour" is "8,342," and the population during "23 o'clock hour" is "4,541."

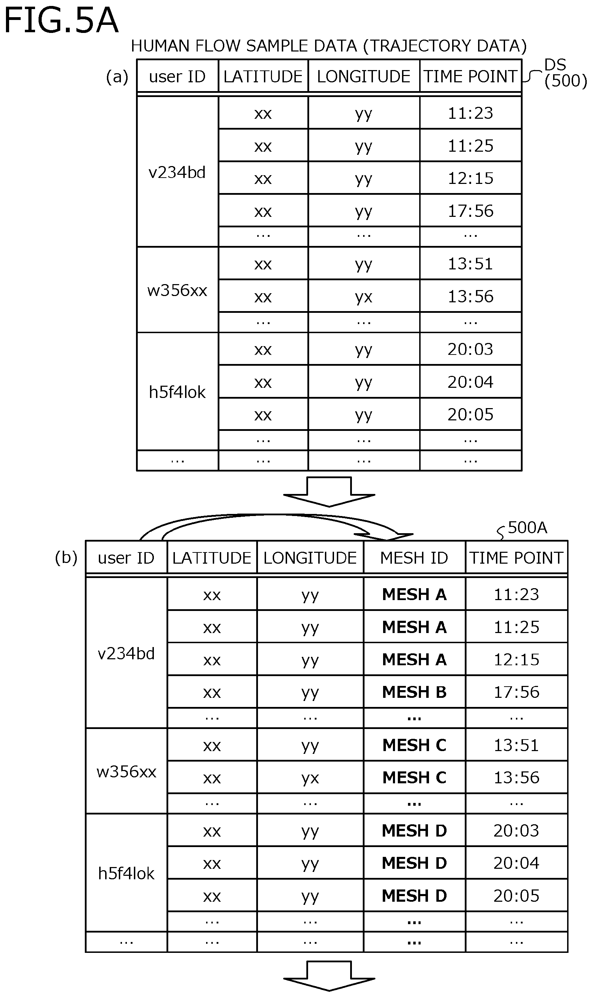

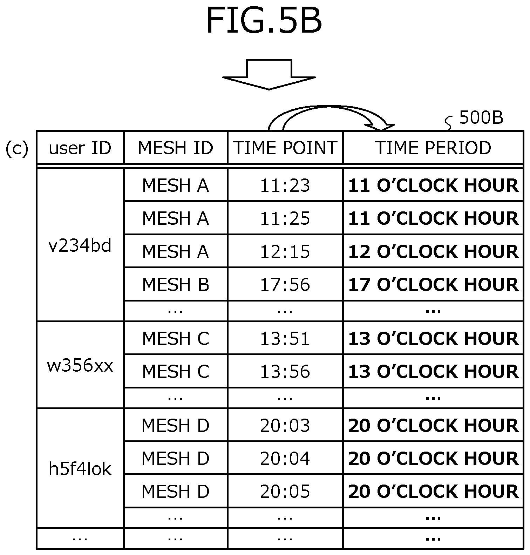

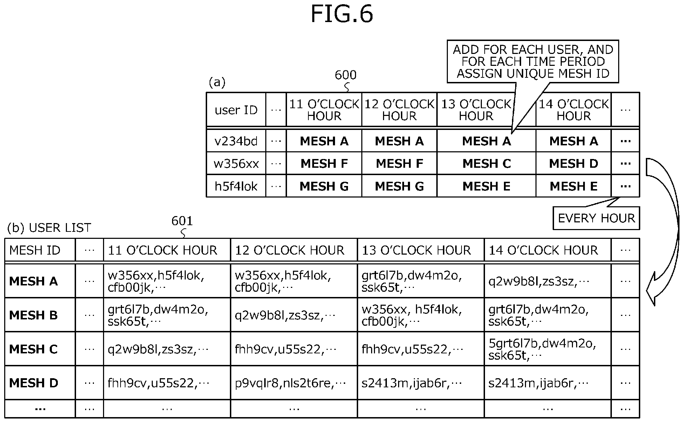

Figs. 5A, 5B, and 6 are diagrams depicting examples of data used in the data processing of human flow sample data according to an embodiment. In Fig. 5A, (a) is a diagram depicting the human flow sample data DS. The data used as the human flow sample data DS is trajectory data 500. The trajectory data 500 is obtained by the mesh assignment calculating unit 103 of the processing unit 101. The trajectory data 500 includes information such as a user ID for each user and the location of the user for each time point (latitude, longitude, time points).

Next, the mesh assignment calculating unit 103 estimates the residential area of each user based on the latitude, longitude, and time points of each user in the trajectory data 500 depicted in (a) of Fig. 5A. Then, trajectory data 500A with information concerning a mesh ID indicating where each user resides is generated as depicted in (b) of Fig. 5A. The mesh assignment calculating unit 103 calculates the mesh separately for each time point.

Next, as depicted in (c) of Fig. 5B, from the trajectory data 500A, the time period calculating unit 104 generates data 500B linking the time periods corresponding to the time points. As a result, it becomes possible to tally users for each (mesh×time period). The time period of the time period is adjusted to the time interval (every 10 minutes, every hour, etc.) of the referenced mesh statistical population data DM.

For example, Fig. 5B depicts an example in which a user with user ID "v234bd" is located in a mesh with a mesh ID "Mesh A" at a time point "11:23" in time period "11:00 o'clock hour." The user with user ID "v234bd" is located in a mesh with mesh ID "Mesh A" at a time point "11:25" in time period "11:00 o'clock hour," and in a mesh with mesh ID "Mesh A" at a time point "12:15" in a time period "12:00 o'clock hour." The user is also located in a mesh with mesh ID "Mesh B" at a time point "17:56" in time period "17:00 o'clock hour."

Next, as depicted in (a) of Fig. 6, the user list creating unit 105 first extracts unique user IDs from the data 500B and creates a list 600 of users and the meshes to which the users belong in each time period. Here, in accordance with constraint 1 as a spatial constraint, the user list creating unit 105 assigns a user to a unique mesh ID in each time period, so that mesh IDs do not overlap in the same time period. For example, the user is assigned to the mesh ID in which they stayed the longest in that time period.

For example, a user with user ID "v234bd" is located in a mesh with mesh ID "Mesh A" continuously during time period "11:00 o'clock hour" to time period "14:00 o'clock hour." A user with user ID "w356xx" is located in a mesh with mesh ID "Mesh F" during time period "11:00 o'clock hour" and time period "12:00 o'clock hour," in a mesh with mesh ID "Mesh C" during time period "13:00 o'clock hour," and in a mesh with mesh ID "Mesh D" during time period "14:00 o'clock hour."

Next, the user list creating unit 105 creates a user list 601 depicted in Fig. 6B from the list 600 of users and corresponding meshes. The user list 601 is a collection of relevant users for each (mesh×time period). For example, the user IDs for time period "11:00 o'clock hour" of mesh ID "Mesh A" are "w356xx, h5f4lok, cfb00jk, ...," and the user IDs for time period "12:00 o'clock hour" are "w356xx, h5f4lok, cfb00jk, ..." There is no overlap of users in any time period of the user list 601, and spatial consistency is maintained.

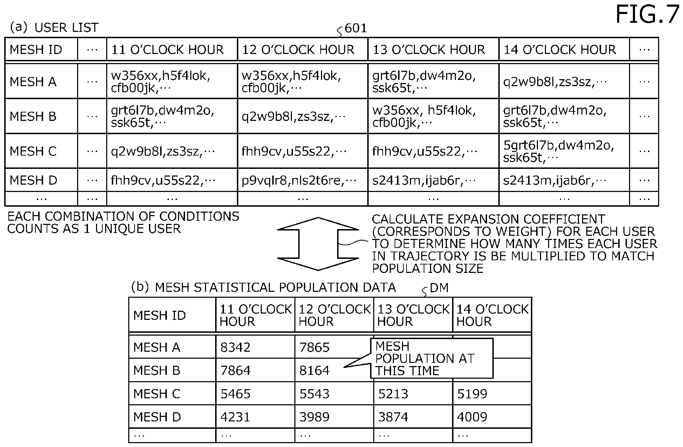

Fig. 7 is a diagram depicting an example of a process of calculating the expansion coefficient according to the embodiment. An example of calculating the expansion coefficient by the expansion coefficient calculating unit 107 will be described. In Fig. 7, (a) is the user list 601 depicted in (b) of Fig. 6 and in Fig. 7, (b) is the mesh statistical population data DM depicted in Fig. 4. In calculating the expansion coefficient, the expansion coefficient calculating unit 107 calculates the expansion coefficient (corresponding to a weight) for each user by determining how many times each user of the trajectory depicted in the user list 601 must be multiplied to match the population parameter in the mesh statistical population data DM.

Since the user list 601 depicted in (a) of Fig. 7 and the mesh statistical population data DM depicted in (b) of Fig. 7 both indicate users by time period in each mesh, the expansion coefficient may be calculated through mutual comparison (using the mesh statistical population data DM as a reference value for the population parameter).

The expansion coefficient calculating unit 107 calculates the expansion coefficient, for example, based on the following formula (1). The expansion coefficient calculating unit 107 aggregates the unique user IDs for each mesh in the mesh statistical population data DM and the user list 601 (trajectory data for each user). The expansion coefficient calculating unit 107 then calculates the expansion coefficient αᵢ for each user so as to minimize the objective function f(α), which represents the difference from the value multiplied by the expansion coefficient for each user.
$\begin{matrix}minimize \\ f \left(α\right) = {\sum }_{a = 1}^{A} {\sum }_{t = 1}^{T} {\left(mn\left(a, t\right)-{\sum }_{i ∈ U \left(a, t\right)} {α}_{i} ⋅ tn \left(i, a, t\right)\right)}^{2} \\ subject to \\ {α}_{i} > 0 \\ {α}_{i} : integer\end{matrix}$ (1)
Where,
αᵢ: expansion coefficient for user i (optimization variable)
A: total number of meshes,
T: total number of time periods,
U(a,t): set of users in trajectory data present in mesh a, at time point (time period) t,
mn(a,t): in mesh statistical population data, number of people in mesh a, at time point (time period) t
tn(i,a,t): binary value (0 or 1) indicating whether user i is present in mesh a, at time point (time period) t in trajectory data.

While the expansion coefficient calculating unit 107 individually evaluates the error of constraint 2 (mesh×time period), the expansion coefficient calculating unit 107 further calculates the expansion coefficient αᵢ of the user under the time constraint that the expansion coefficient αᵢ is fixed throughout the day (not set as a variable for ×time period). This prevents inconsistencies such as a sudden decrease of trajectories during a certain time period while taking into account movement of the user through multiple meshes, ensuring spatiotemporal continuity.

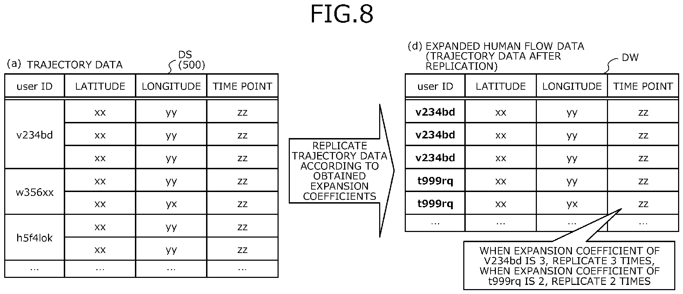

Fig. 8 is a diagram depicting an example of a data replication process based on an expansion coefficient according to an embodiment. In Fig. 8, (a) depicts the trajectory data 500 obtained by the processing unit 101, and is the same data as that depicted in (a) of Fig. 5A. The human flow expanding unit 108 obtains the expanded human flow data DW by replicating the trajectory data 500 by the expansion coefficient calculated by the expansion coefficient calculating unit 107. For example, when the expansion coefficient for user ID "v234bd" is 3, the expanded human flow data DW will be replicated for three people (three times), and when the expansion coefficient for user ID "t999rq" is 2, the expanded human flow data DW will be replicated for two people (two times).

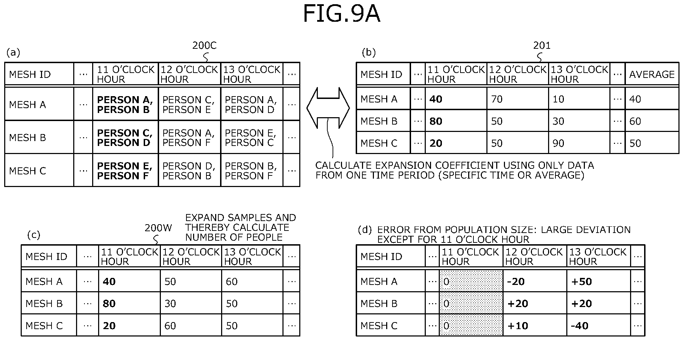

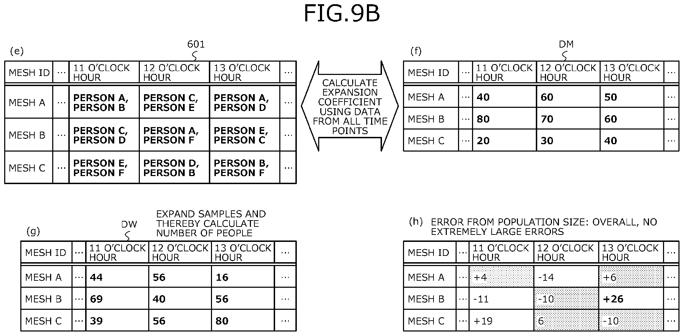

Next, the errors in human flow expansion in the background art and the embodiment will be compared and described with reference to Figs. 9A and 9B.

Fig. 9A is a chart for explaining deviation from the population parameter when human flow is expanded in the background art. In the background art, the user list 200C depicted in (a) of Fig. 9A and the population parameter data 201 depicted in (b) of Fig. 9A are created (see Fig. 2C). In the background art, the expansion coefficient is calculated using only the users (bold characters) present in each mesh for one (1) time period (11:00 o'clock hour) in the user list 200C and the population parameter data (bold characters) for the "11:00 o'clock hour" time period in the population parameter data 201.

In the user list 200C depicted in (a) of Fig. 9A, the number of users (samples) in the "11:00 o'clock hour" time period is two for each of meshes A, B, and C. In (b) of Fig. 9A, the populations of the "11:00 o'clock hour" population parameter are "40" for mesh A, "80" for mesh B, and "20" for mesh C.

In this case, when users A and B belonging to mesh A are multiplied by 20, users C and D belonging to mesh B are multiplied by 40, and users E and F belonging to mesh C are multiplied by 10, the numbers will match the number of people of the population parameter, so these magnification factors are used as the expansion coefficients.

The expanded (replicated) data 200W depicted in (c) of Fig. 9A depicts the number of people in each mesh after expansion. The number of people in each mesh in "11:00 o'clock hour" time period matches the population parameter data 201. However, the number of people in each mesh in other (12:00 o'clock hour and 13:00 o'clock hour) time periods deviates significantly from the population parameter data 201 of the population parameter.

In Fig. 9A, (d) depicts the error (deviation in number of people) from the population parameter for each time period after expansion. For example, in the "12:00 o'clock hour" time period, the number of people "50" in mesh A is "-20" compared to the number of people "70" of the population parameter, the number of people "30" in mesh B is "+20" compared to the number of people "50" of the population parameter, and the number of people "60" in mesh C is "+10" compared to the number of people "50" of the population parameter. Thus, in the background art, the expansion coefficient is calculated using only data from one time period (specific time or average) and therefore, expansion of human flow taking into account changes in human flow (population trends) that vary according to time period is impossible.

Fig. 9B is a diagram depicting human flow expansion according to the embodiment. In the present embodiment, the user list 601 depicted in (a) of Fig. 9A and mesh statistical population data (population parameter data regarding population) DM depicted in (b) of Fig. 9A are created (see Fig. 7). In the present embodiment, the expansion coefficient is calculated using users (bold characters) present in each mesh for all (11:00 o'clock hour, 12:00 o'clock hour, ...) time periods in the user list 601 and data (bold characters) for all (11:00 o'clock hour, 12:00 o'clock hour, ...) time periods in the population parameter data regarding population.

The processing unit 101 of the present embodiment compares the portions (indicated by bold characters) of the population parameter data DM with the user list 601 to determine an expansion coefficient that reduces the average difference between the populations of all meshes for all time points. For example, the processing unit 101 may multiply user A by 2, user B by 42, user C by 55, user D by 14, user E by 1, and user F by 38, which will reduce the overall difference from the population parameter and thus use these magnification factors as expansion coefficients. The expanded (replicated) data DW depicted in (g) of Fig. 9B indicates the number of people in each mesh after expansion.

In Fig. 9B, (h) depicts the error (deviation of the number of people) from the population parameter for each time period after expansion. According to the embodiment, the number of people in each mesh for each time period (11:00 o'clock hour, 12:00 o'clock hour, 13:00 o'clock hour) after expansion does not have an extremely large error overall compared to the population parameter data 201.

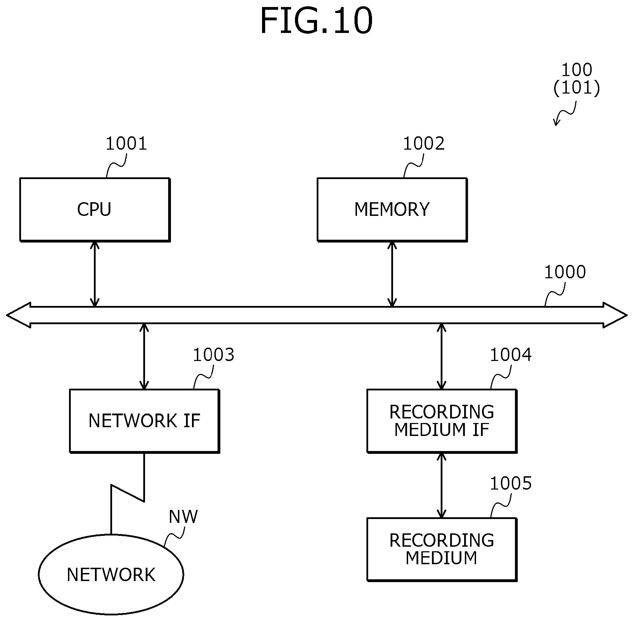

Fig. 10 is a block diagram of an example of a hardware configuration of a data generating device. In Fig. 10, a data generating device 100 has a central processing unit (CPU) 1001, a memory 1002, a network interface (I/F) 1003, a recording medium I/F 1004, and a recording medium 1005. Further, the components are connected to each other by a bus 1000.

Here, the CPU 1001 governs overall control of the data generating device 100. The memory 1002, for example, includes a read-only memory (ROM), a random access memory (RAM), and a flash-ROM. In particular, for example, the flash-ROM stores therein OS programs, the ROM stores therein application programs, and the RAM is used as a work area of the CPU 1001. Programs stored in the memory 1002 are loaded onto the CPU 1001, whereby encoded processes are executed by the CPU 1001.

The network I/F 1003 is connected to the network NW via a communications line and is connected to other computers through the network NW. Further, the network I/F 1003 administers an internal interface with the network NW and controls the input and output of data with respect to the other computers. The network I/F 1003, for example, is a modem, a LAN adapter, or the like.

The recording medium I/F 1004 controls the reading and writing of data with respect to the recording medium 1005 under the control of the CPU 1001. The recording medium 1005 store data written thereto. Examples of recording medium 1005 include magnetic disks such as HDDs, optical disks, solid state drives (SSDs), and universal serial bus (USB) memories.

In addition to the above components, the data generating device 100 may also include, for example, an input device, a display, and the like.

Functions of the processing unit 101 depicted in Fig. 1 may be implemented by executing a program by the CPU 1001 depicted in Fig. 10. Data handled by the processing unit 101 depicted in Fig. 1 may be recorded using the memory 1002 and the recording medium 1005 depicted in Fig. 10. The functions of obtaining data and outputting data by the processing unit 101 depicted in Fig. 1 may be implemented, for example, using the network IF 1003 depicted in Fig. 10.

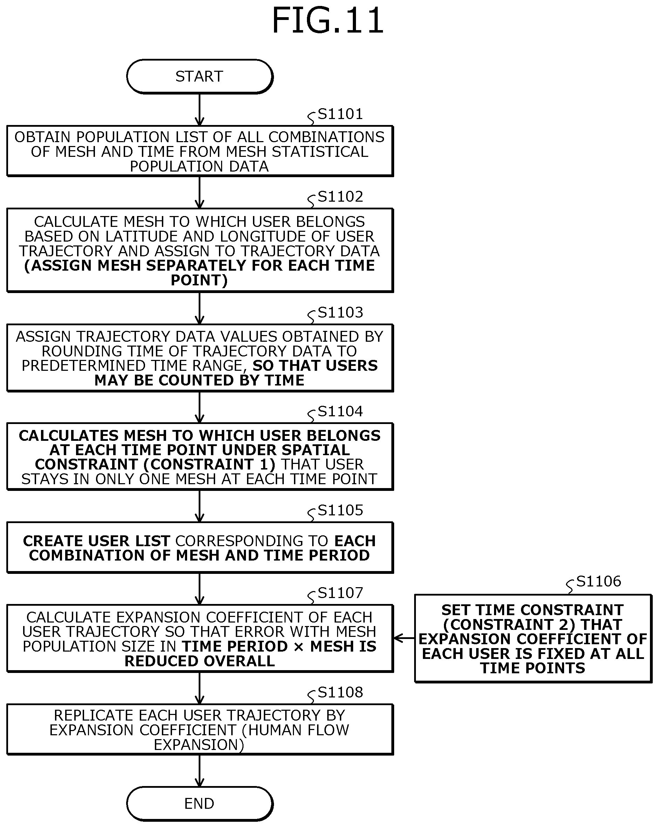

Fig. 11 is a flowchart depicting an example of the data process by the data generating device according to the embodiment. The processing unit 101 (CPU 1001) of the data generating device 100 performs the following processing. In Fig. 11, characteristic processes of the present disclosure are depicted in bold and the functional units of the processing unit 101 corresponding to each process are indicated in the description below.

First, the processing unit 101 (population list generating unit 102) obtains a population list of all combinations of mesh and time (mesh×time) from the mesh statistical population data DM (step S1101). Next, the processing unit 101 (mesh assignment calculating unit 103) obtains the trajectory data (human flow sample data DS) and calculates the mesh to which each user belongs based on the latitude and longitude of the trajectory of the user and adds the calculated mesh to the trajectory data (step S1102: assigning a mesh separately for each time).

Next, the processing unit 101 (time period calculating unit 104) appends to the trajectory data, values obtained by rounding the time of the trajectory data to a predetermined time range, so that users may be counted according to time (step S1103). Next, the processing unit 101 (user list creating unit 105) calculates the mesh to which each user belongs at each time point under the spatial constraint (constraint 1) that the user must stay in only one mesh at each time point (step S1104).

Next, the processing unit 101 (user list creating unit 105) creates a user list 601 corresponding to each combination of mesh and time period (step S1105).

The processing unit 101 (expansion coefficient time constraint generating unit 106) sets the time constraint (constraint 2) that the expansion coefficient of each user is fixed at all time points (step S1106). Then, under constraint 2, the processing unit 101 (expansion coefficient calculating unit 107) calculates the expansion coefficient of each user trajectory so that the error with the population parameter of the mesh population for the time period×mesh is reduced overall (step S1107).

The processing unit 101 (human flow expanding unit 108) then replicates each user trajectory by the expansion coefficient (human flow expansion) (step S1108). The processing unit 101 (human flow expanding unit 108) outputs the expanded human flow data DW. Thus, the processing unit 101 completes the series of processes.

The background art only predicts a specific time and a specific population. In contrast, the present embodiment enables accurate estimation of the total number of people moving continuously within a specified area and time. Furthermore, the present embodiment makes it possible to accurately replicate population trends, which vary according to time and cannot be obtained from a census.

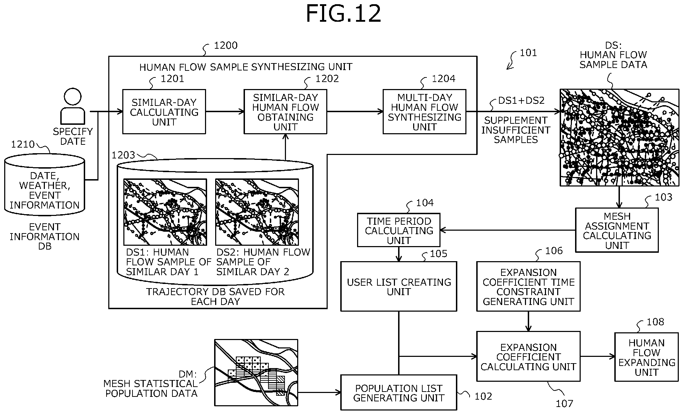

Fig. 12 is a functional diagram of a second example. The processing unit 101 in the second example performs a process when the number of samples in the human flow sample data DS to be processed is very small. When the number of samples in the human flow sample data DS is very small, and the number of human flow samples at the input stage is very small, the human flow expansion will be overly biased toward a specific pattern, even though the number of people matches.

Therefore, the processing unit 101 in the second example ensures the number of samples by combining similar human flow samples from multiple days so that the samples are treated as human flow samples from the same date, before processing the human flow expansion. As depicted in Fig. 12, the processing unit 101 includes a human flow sample synthesizing unit 1200 in addition to the functional units depicted in Fig. 1.

The human flow sample synthesizing unit 1200 includes functions of a similar-day calculating unit 1201, a similar-day human flow obtaining unit 1202, a trajectory-data database (DB) 1203, and a multi-day human flow synthesizing unit 1204. The trajectory-data DB 1203 stores trajectory data for each past day. Note that the trajectory-data DB 1203 may be located outside the processing unit 101 (data generating device 100).

The similar-day calculating unit 1201, in response to an operation by a user U, obtains date-specified information from the human flow sample data DS of a small number of samples to be processed and obtains date, weather, event information, etc. from an event information DB 1210. The similar-day calculating unit 1201 calculates one or more similar days based on an assumption that days with similar weather or events in the event information DB 1210 on days different from the date-specified human flow sample data DS will have similar human flows.

The similar-day human flow obtaining unit 1202 obtains human flow samples (trajectory data) corresponding to the similar day calculated by the similar-day calculating unit 1201 from the trajectory-data DB 1203. In the example depicted in Fig. 12, the calculated similar day is the 2nd, and correspondingly, the similar-day human flow obtaining unit 1202 obtains trajectory data for a human flow sample DS1 for similar day 1 and a human flow sample DS2 for similar day 2.

The multi-day human flow synthesizing unit 1204 synthesizes the trajectory data of the human flow samples DS1 and DS2 for similar days 1 and 2 obtained by the similar-day human flow obtaining unit 1202 to generate synthesized human flow data (DS1+DS2). The multi-day human flow synthesizing unit 1204 then synthesizes the generated synthesized human flow data (DS1+DS2) as a human flow sample for the same date as the human flow sample data DS.

As a result, when the number of samples to be processed in the human flow sample data DS is small, the trajectory data for the insufficient samples may be supplemented by the human flow samples DS1 and DS2 from similar days 1 and 2. The human flow sample data DS after the samples have been supplemented by the human flow sample synthesizing unit 1200 is similarly processed by each functional unit of the processing unit 101 described above.

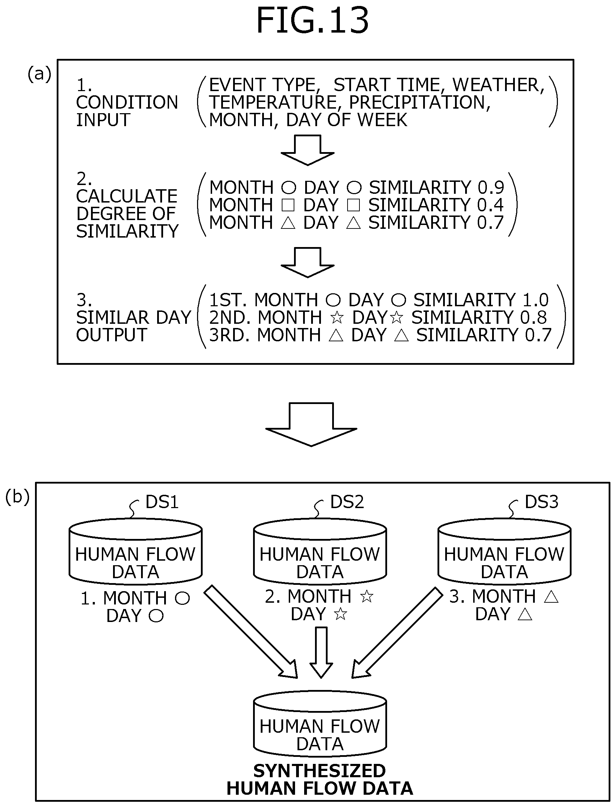

Fig. 13 is an explanatory diagram of the synthesis of multiple human flow samples that match a date specification. In Fig. 13, (a) depicts an example of the data process by the similar-day calculating unit 1201. The similar-day calculating unit 1201 performs the following processes 1. to 3..

First, the similar-day calculating unit 1201: 1. obtains input conditions (type of event, start time of event, weather, temperature, amount of precipitation, month, day of the week, etc.) through an operation by the user U. Next, the similar-day calculating unit 1201: 2. performs similarity calculation for the different dates for which the conditions were input at 1.. The similar-day calculating unit 1201 calculates the similarity of each date stored in the event information DB 1210.

The similar-day calculating unit 1201 then outputs a date with high similarity (similar day) from among the dates. In the example in (a) of Fig. 13, three similar days ranked first to third in the descending order of similarity are output.

In Fig. 13, (b) depicts an example of data synthesis by the multi-day human flow synthesizing unit 1204. The multi-day human flow synthesizing unit 1204 indicates the synthesis state of three human flow data (corresponding to human flow samples DS1 to DS3 in Fig. 13) for dates corresponding to the three similar days output by the similar-day calculating unit 1201. The multi-day human flow synthesizing unit 1204 synthesizes the trajectory data of these three human flow data (human flow samples DS1 to DS3) thereby generating synthesized human flow data (DS1+DS2+DS3).

Thereafter, the multi-day human flow synthesizing unit 1204 synthesizes the generated human flow synthesized data (DS1+DS2+DS3) with the human flow sample data DS, which is the data processing target. This allows the number of samples in the human flow sample data DS, which has a small number of samples, to be supplemented (increased) by the human flow synthesized data (DS1+DS2+DS3), thereby improving the accuracy of the calculation of the expansion coefficient in subsequent processing.

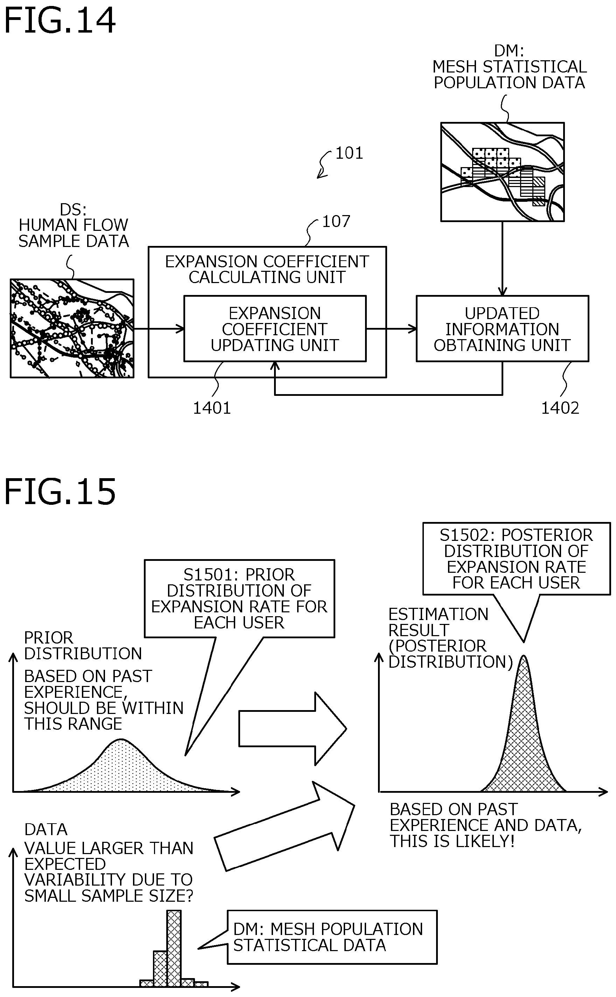

Fig. 14 is a functional diagram of a third example. The third example has a function of continuously updating the expansion coefficient after calculating the expansion coefficient once. Fig. 14 depicts only the expansion coefficient calculating unit 107 of the processing unit 101.

In the third example, the expansion coefficient calculating unit 107 has an expansion coefficient updating unit 1401 and an updated information obtaining unit 1402. The updated information obtaining unit 1402 obtains updated demographic information (mesh statistical population data DM) and outputs the obtained data to the expansion coefficient updating unit 1401. The expansion coefficient updating unit 1401 updates the expansion coefficient calculated once by the expansion coefficient calculating unit 107 using the updated mesh statistical population data DM.

For example, an expansion coefficient calculated when only mesh statistical population data DM for a limited period or area is available may result in overfitting. To address this issue, in the third example, continuous data acquisition and expansion coefficient updates are used to calculate a more proper expansion coefficient. Furthermore, when the mesh statistical population data DM may be obtained in real time, the expansion coefficient may be updated each time the mesh statistical population data DM is obtained, thereby always adapting to the latest population distribution.

There are various calculation examples for updating the expansion coefficient. For example, 1. there is an update method that uses the mesh statistical population data DM, the existing expansion coefficient α_{old}, and the error between the populations estimated using the trajectory (the following formulas (2) to (4)).
$E = {\sum }_{a = 1}^{A} {\sum }_{t = 1}^{T} {\left(mn\left(a, t\right)-{\sum }_{i ∈ U \left(a, t\right)} {α}_{old i} ⋅ tn \left(i, a, t\right)\right)}^{2}$ (2)
$Δ E = \frac{E}{\partial α}$ (3)
${α}_{new i} = {α}_{old i} + β ⋅ Δ {E}_{i}$ (4)

Here, mn(a,t) represents population of latest mesh statistical population data DM, and α_{old I} represents an existing expansion coefficient (or initial value). Formula (2) expresses the population error; Formula (3) expresses the gradient (update direction of each expansion coefficient); and Formula (4) is the update formula for the expansion coefficient α (β: arbitrary constant). In addition, more advanced parameter update formulas used in machine learning etc. may also be used.

Further, 2. there is a method of calculating an expansion coefficient αₗₐₜₑₛₜ using the latest mesh population, and taking a weighted average with the existing expansion coefficient α_{old} as the update value (Formula (5) below).
${α}_{new i} = β ⋅ {α}_{old i} + \left(1-β\right) {α}_{{latest}_{i}}$ (5)

Formula (5) expresses the update of the expansion coefficient α (β: arbitrary coefficient between 0 and 1).

In addition, the expansion coefficient may also be calculated based on the following procedure using a probability distribution rather than a unique value (Formulas (6) and (7) below).
1. The expansion coefficient αᵢ for each user i is assumed to follow a normal distribution αᵢ~N(µᵢ,τᵢ²). Here, µᵢ and τᵢ² are the mean and variance (unknown parameters), which will be found later using the maximum likelihood method.
2. Observation model (mesh×time population)
Let Mₙ be the population observed for mesh×time collectively, n=1, ..., N, and T_{m,i} represents a flag (0 or 1) indicating that user i is included in mesh×timeₙ. The expansion coefficient αᵢ is a random variable, and as a population, each αᵢ is considered to be independently normally distributed, and the observed Mₙ is assumed to follow the normal distribution (Formula (6)) below (σ²: variance parameter for measurement noise and unexplained errors).
${M}_{i} ∼ N \left({\sum }_{i = 1}^{N} {μ}_{i} {T}_{m , i}, {\sum }_{i = 1}^{N} \left({T}_{m , i}{{τ}_{i}}^{2}\right) + {σ}^{2}\right)$ (6)

The likelihood of Formula (6) is expressed as follows. The parameters µ, τᵢ², and σ² of the distribution of each user are calculated so that L(µ,τᵢ²,σ²) in Formula (7) below is minimized (maximum likelihood method).
$L \left(μ, {{τ}_{i}}^{2}, {σ}^{2}\right) = {\prod }_{m = 1}^{M} \frac{1}{\sqrt{2 π \left({\sum }_{i} {τ}^{2} {T}_{m , i}^{2} + {σ}^{2}\right)}} {exp}^{\left\{\frac{{\left({M}_{n}-{\sum }_{i} {μ}_{i} {T}_{m , i}\right)}^{2}}{2 \left({\sum }_{i} {{τ}_{i}}^{2} {{T}_{m , i}}^{2} + {σ}^{2}\right)}\right\}}$ (7)

Fig. 15 is an explanatory diagram of an example of updating the distribution of probabilistic expansion coefficients. There is also a method for updating the probability distribution described above. For example, the distribution is updated by using a Bayesian update in the following processing order, considering the user expansion coefficient as a probability distribution rather than a unique value.
1. Set the prior distribution of the expansion coefficient for each user (step S1501).
   Example: A normal distribution with mean µ_{old} and variance σ_{old}² of an arbitrary value.
2. Update the probability distribution of each user expansion coefficient to a posterior distribution with a reliable distribution each time the mesh statistical population data DM (observed values) is obtained (step S1502).
3. Obtain a single value by sampling from the probability distribution when a single expansion coefficient is necessary.

More specific steps in the data process are depicted below.

### 1. Initial value setting

Let the prior distribution be p(α)=N(µ_{old},σ_{old}²), and let the obtained mesh space statistical population data (observation data) for a certain time obtained×mesh be Mₙ.

Set posterior distribution (if no data is available, prior=posterior) to p(α|Mₙ 0)=N(µ_{old},σ_{old}²).

### 2. Obtain new mesh space statistical population data Mₙ ^{k+1}.

3. Calculate a likelihood p(Mₙ^{k+1}|α) based on the obtained mesh statistical population data.
4. Update the distribution of the expansion coefficient α using Bayes' theorem (calculate the posterior distribution using the likelihood, Formula (8) below).

### POSTERIOR DISTRIBUTION:

$p \left(\left.α\right|{M}_{n}^{k + 1}\right) = \frac{LIKELIHOOD : p \left(\left.{M}_{n}^{k + 1}\right|α\right) ⋅ PRIOR DISTRIBUTION : p \left(\left.α\right|{M}_{n}^{k}\right)}{NORMALIZATION CONSTANT : \int p \left(\left.{M}_{n}^{k + 1}\right|α′\right) ⋅ p \left(\left.α′\right|{M}_{n}^{k}\right) dα ′}$ (8)

5. Set the posterior distribution (Mₙ^{k+1}) obtained by the update as the prior distribution for the next step.
6. Repeat steps 2 to 5 each time new mesh statistical population data is obtained.

In addition to the location information and time, the human flow sample data DS and the mesh statistical population data DM may further include attribute information such as user age and sex. In this case, the processing unit 101 obtains the human flow sample data DS including user age and sex, and the mesh statistical population data DM. This enables the processing unit 101 to calculate an expansion coefficient for each more detailed attribute, such as age and sex. For example, in addition to calculating an expansion coefficient for each user movement pattern, calculating an expansion coefficient for each user separately by age and sex enables calculation of an expansion coefficient that captures differences in behavior patterns by age and sex.

The data generating method described in the present embodiment may be implemented by executing a prepared program on a computer such as a PC or workstation. The data generating program described in the present embodiment is recorded on a computer-readable recording medium and is executed by being read out from the recording medium. The data generating program described in the present embodiment may also be distributed via a network such as the Internet.

According to the embodiment described above, mesh statistical population data indicating population statistics according to time points on a mesh-by-mesh basis is obtained, and human flow sample data including user movement trajectories according to time is obtained. Based on the human flow sample data, the mesh to which a user belongs for each time period is calculated, and a user list of users belonging to each mesh for each time period is created. A time constraint is set in advance, fixing the expansion coefficient for each user at all times, and under the time constraint (constraint 2), an expansion coefficient for each user is calculated based on a comparison between the user list and the mesh statistical population data. The user movement trajectories of the human flow sample data are then replicated using the expansion coefficient for each user. This improves the accuracy of human flow data expansion. Here, the time constraint of the user expansion coefficient being fixed throughout the day takes into account the fact that users move through multiple meshes, preventing problems such as a sudden decrease in movement trajectories during a certain time period and maintaining spatiotemporal continuity. In the present embodiment, human flow data expansion is performed by capturing the characteristics of temporal positional changes in movement trajectories of users, and the human flow sample data is replicated taking into account the movement trajectories, which differ according to user. A finer expansion rate may be calculated for each user, enabling more realistic replication (scaling up of human flow samples) that takes into account travel demand and likelihood through replication.

In the embodiment, the process of creating a list of meshes creates a list of meshes under a spatial constraint (constraint 1) that a user is located in only one mesh at each time point. Setting constraint 1 prevents overlapping of meshes in which users are located during the same time period, maintaining spatial consistency. This also improves the accuracy of the calculated expansion coefficient.

In the embodiment, the process of calculating the expansion coefficient calculates the expansion coefficient for each user by minimizing an objective function that represents the difference between the aggregate of the unique users for each mesh in the mesh statistical population data and the human flow sample data, and the value multiplied by the expansion coefficient for each user. As a result, it becomes possible to compare the mesh statistical population data and the human flow sample data by mesh×time period, and calculate the expansion coefficient for each user by determining by how many times each user in the human flow sample data is to be multiplied to match the population of the population parameter in the mesh statistical population data.

In the embodiment, when the number of samples contained in the human flow sample data is small, the process of obtaining human flow sample data obtains pre-stored human flow sample data for other similar days under conditions similar to those of the obtained human flow sample data. The movement trajectories of the human flow sample data are combined with the movement trajectories of the human flow sample data for similar days. By combining the movement trajectories of similar days, even when the number of samples in the human flow sample data is small, the expansion coefficient may be calculated with high accuracy.

In the embodiment, the process of obtaining mesh statistical population data obtains updated mesh statistical population data each time the mesh statistical population data is updated. The process of calculating the expansion coefficient updates the expansion coefficient using the updated mesh statistical population data. For example, when only mesh statistical population data for a limited period or mesh may be obtained, there is a possibility of over-fitting when expanding human flow. Therefore, by obtaining updated mesh statistical population data and updating the expansion coefficient each time the updated mesh statistical population data is obtained, it becomes possible to calculate an expansion coefficient that is more realistic. Furthermore, when mesh statistical population data may be obtained in real time, the expansion coefficient may be updated frequently, allowing the system to accommodate the latest population distribution.

In the embodiment, the process of updating the expansion coefficient updates the expansion coefficient so that the number of samples in the human flow sample data approximates the mesh population of the updated mesh statistical population data. As described, by updating the expansion coefficient each time updated mesh statistical population data is obtained, it becomes possible to improve the accuracy of the calculated expansion coefficient.

In the embodiment, the process of updating the expansion coefficient sets the calculated expansion coefficient using a normal distribution for each user. Each time updated mesh statistical population data is obtained, the probability distribution for each user may be updated based on the likelihood calculated based on the mesh statistical population data and a normalization constant. In the above-described embodiment, in processes that do not use a probability distribution, the expansion coefficient is calculated as a single numerical value for each user. In this case, in actual situations, the number of people does not necessarily increase by this magnification factor, resulting in errors and uncertainty with respect to the actual number of people. Therefore, by treating the expansion coefficient itself as a probability distribution, the expansion coefficient may be expressed in a form with "fluctuations" or "range" rather than a simple numerical value, such as "This user has a high probability of 10 times, but there is also a slight possibility that it will be 9 times or 11 times." This enables more flexible consideration of errors between the actual population and human flow sample data, with the result that a replication closer to reality may be expected.

Furthermore, human flow sample data and mesh statistical population data may include user attribute information such as age and sex in addition to location information and time. In this case, in the embodiment, the process of obtaining human flow sample data and mesh statistical population data obtains human flow sample data and mesh statistical population data that include user attribute information such as age and sex. The process of calculating the expansion coefficient calculates an expansion coefficient for age and sex attributes of each user. As described, by calculating an expansion coefficient for each user separately by age and sex, in addition to calculating an expansion coefficient for each movement route, it is possible to calculate an expansion coefficient that captures differences in behavioral patterns by age and sex.

According to one aspect, the accuracy of human flow data expansion may be improved.

All examples and conditional language provided herein are intended for pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

## Claims

1. A data generating method for expanding human flow data and executed by a computer, the method comprising:
obtaining mesh statistical population data indicating population statistics according to time points on a mesh-by-mesh basis;
obtaining human flow sample data including a plurality of movement trajectories of a plurality of users according to the time points;
calculating for each of the plurality of users and based on the human flow sample data, which mesh of a plurality of meshes the each of the plurality of users belongs to for each time period of a plurality of time periods;
creating a user list indicating for each of the plurality of meshes, users of the plurality of users belonging thereto for each time period;
setting, in advance, a time constraint condition fixing for all the time points, an expansion coefficient for each of the plurality of users;
calculating under the time constraint condition, the expansion coefficient for each of the plurality of users, based on a comparison of the user list and the mesh statistical population data; and
replicating the plurality of movement trajectories of the human flow sample data for each of the plurality of users using the expansion coefficient for the each of the plurality of users.

2. The data generating method according to claim 1, wherein the creating the user list includes creating the user list under a spatial constraint specifying that each of the plurality of users is located in only one mesh at each time point.

3. The data generating method according to claim 1, wherein the calculating the expansion coefficient includes:
aggregating in the mesh statistical population data and the human flow sample data, unique users for each of the plurality of meshes; and
calculating the expansion coefficient for each of the plurality of users by minimizing an objective function that represents a difference from a value obtained by multiplying the expansion coefficient for each of the plurality of users.

4. The data generating method according to claim 1, wherein when the obtained human flow sample data includes a small number of samples, the obtaining the human flow sample data further includes:
obtaining previously stored human flow sample data, for a similar day with conditions similar to those of the obtained human flow sample data, and
combining a plurality of movement trajectories of the human flow sample data for the similar day and the plurality of movement trajectories of the human flow sample data that includes the small number of samples.

5. The data generating method according to claim 1, wherein
the obtaining the mesh statistical population data includes obtaining updated mesh statistical population data each time the mesh statistical population data is updated, and
the calculating the expansion coefficient includes updating the expansion coefficient using the updated mesh statistical population data.

6. The data generating method according to claim 5, wherein the updating the expansion coefficient includes updating the expansion coefficient so that the number of samples in the human flow sample data approximates a mesh population of the updated mesh statistical population data.

7. The data generating method according to claim 5, wherein the updating the expansion coefficient includes:
setting the calculated expansion coefficient by a normal distribution for each user; and
each time the updated mesh statistical population data is obtained, updating a probability distribution for each user, based on a normalization constant and a likelihood calculated from the mesh statistical population data.

8. The data generating method according to claim 1, wherein when the human flow sample data and the mesh statistical population data include location information, the time points, and also user attribute information concerning age and sex, the obtaining the human flow sample data and the obtaining the mesh statistical population data include obtaining the human flow sample data and the mesh statistical population data including the user attribute information concerning age and sex, and the calculating the expansion coefficient includes calculating the expansion coefficient for each user attribute of age and sex.

9. A data generating program for causing a computer to execute a process for expanding human flow data, the process comprising:
obtaining mesh statistical population data indicating population statistics according to time points on a mesh-by-mesh basis;
obtaining human flow sample data including a plurality of movement trajectories of a plurality of users according to the time points;
calculating for each of the plurality of users and based on the human flow sample data, which mesh of a plurality of meshes the each of the plurality of users belongs to for each time period of a plurality of time periods;
creating a user list indicating for each of the plurality of meshes, users of the plurality of users belonging thereto for each time period;
setting, in advance, a time constraint condition fixing for all the time points, an expansion coefficient for each of the plurality of users;
calculating under the time constraint condition, the expansion coefficient for each of the plurality of users, based on a comparison of the user list and the mesh statistical population data; and
replicating the plurality of movement trajectories of the human flow sample data for each of the plurality of users using the expansion coefficient for the each of the plurality of users.
